# EUROPÄISCHE PATENTSCHRIFT

(11) **EP 3 561 339 B1**
(45) Veröffentlichungstag und Bekanntmachung des Hinweises auf die Patenterteilung: **30.09.2020**
(21) Anmeldenummer: 19164858.3
(22) Anmeldetag: 25.03.2019
(51) Int. Cl.: F16H 57/038, F16H 57/04

(54) **GETRIEBE MIT TRENNEINSATZ**
TRANSMISSION WITH SPLIT USE
ENGRENAGE POURVUE D'INSERT DE SÉPARATION

(30) Priorität: 27.04.2018 DE 102018110242
(43) Veröffentlichungstag der Anmeldung: 30.10.2019
(73) Patentinhaber: ebm-papst St. Georgen GmbH & Co. KG, 78112 St. Georgen (DE)
(72) Erfinder: ELL, Nikola, 90571 Schwaig (DE); GARCIA-EIBL, Sebastian, 91227 Leinburg (DE); OBERMEYER, Friedrich, 91301 Forchheim (DE)
(74) Vertreter: Staeger & Sperling Partnerschaftsgesellschaft mbB

(56) Entgegenhaltungen:
- EP-A1- 0 360 911
- EP-A1- 0 388 500
- DE-A1-102016 216 880
- DE-U1- 8 138 613

## Beschreibung

Die Erfindung betrifft ein Getriebe mit einem Getriebegehäuse in dem zwei voneinander getrennte Kammern ausgebildet sind, wobei ein Schmiermittel zur Schmierung einer Zahnradpaarung des Getriebes in eine erste Kammer eingebracht ist und darin durch einen Trenneinsatz gehalten wird.

Im Stand der Technik sind bereits verschiedene Getriebe mit unterschiedlichen Schmiermittelkonzepten bekannt. Im Allgemeinen soll das Getriebe durch ein Schmiermittel, beispielsweise Schmierfett oder Schmieröl, geschmiert werden. Dabei tritt regelmäßig das Problem auf, dass das Schmiermittel aus den Verzahnungsbereichen der Getriebezahnräder verdrängt wird und sich in einem zu den Verzahnungen benachbarten Bereich ansammelt. Die Verzahnungen werden dadurch über die Lebensdauer nicht oder zumindest nicht optimal geschmiert. Trotz Bereitstellung von Schmiermittel kann es dann zu einem übermäßigen oder vorzeitigen Verschleiß und einer damit einhergehenden Beschädigung der Zahnräder kommen. Im Stand der Technik sind zur Lösung des Problems Verdrängerkörper vorgesehen, welche den an die Verzahnung angrenzenden Freiraum füllen, sodass das Schmiermittel nicht abfließt.

Derartige Verdrängerkörper haben jedoch mehrere Nachteile. Zunächst besteht die Gefahr, dass das Schmiermittel an dem Verdrängerkörper vorbei in einen anderen Raum gefördert wird, sodass das Problem nicht gelöst, sondern lediglich verlagert wird. Hinzukommt, dass die Verdrängerkörper zum Teil einen vergleichsweise hohen Materialeinsatz und Herstellungsaufwand erfordern, da die Verdrängerkörper teilweise aus Vollmaterial gebildet werden und passgenau hergestellt werden müssen, um ein Schleifen beweglicher Teile an dem Füllkörper zu verhindern.

Problematisch ist ferner, dass die durch die Verdrängerkörper ausgefüllten Räume für technische Funktionen nicht nutzbar sind. Beispielsweise kann sich eine Welle oder Achse nicht durch einen solchen Füllkörper erstrecken, da sonst das Schmiermittel in den Verdrängerkörper oder an dem Verdrängerkörper vorbei gefördert werden kann. Zudem müsste die Form des Verdrängerkörpers entsprechend angepasst werden, wodurch jedoch die Herstellung und die Montage kostenintensiver werden würde.

Weitere Getriebe mit einem Trenneinsatz sind beispielsweise aus den Dokumenten EP 0 388 500 A1, EP 0 360 911 A1, DE 81 38 613 U1 und DE 10 2016 216 880 A1 bekannt.

Der Erfindung liegt deshalb die Aufgabe zugrunde, die vorgenannten Nachteile zu überwinden und ein Getriebe bereitzustellen, in welchem das Schmiermittel an den Zahnradverzahnungen gehalten werden kann, wobei gleichzeitig die verbleibenden Bereiche nutzbar bleiben sollen.

Diese Aufgabe wird durch die Merkmalskombination gemäß Patentanspruch 1 gelöst.

Erfindungsgemäß wird ein Getriebe, vorzugsweise ein Winkelgetriebe, mit einem Getriebegehäuse vorgeschlagen, das die Merkmale des Anspruchs 1 aufweist.

Das Schmiermittel bzw. der Schmierstoff wird zur Schmierung der Zahnradpaarung vorgesehen und reduziert die Reibung zwischen den Verzahnungen. Durch den Trenneinsatz können in dem Getriebegehäuse zwei voneinander abgedichtete getrennte Kammern ausgebildet und gleichzeitig sichergestellt werden, dass der Schmierstoff aus der ersten Kammer, in welcher die Verzahnungen der Zahnräder ineinander greifen, nicht entweichen kann. Die zweite Kammer bleibt weiterhin technisch nutzbar.

Das Getriebe ist in einer bevorzugten Ausführungsform ein Kronenradgetriebe, wobei das erste Zahnrad durch das Stirnrad und das zweite Zahnrad durch das Kronenrad gebildet wird. In gleicher Weise kann die Erfindung jedoch auch für ein Kegelradgetriebe eingesetzt werden. Dann ist das erste Zahnrad das Kegelrad und das zweite Zahnrad das Tellerrad.

Bei einer vorteilhaften Weiterbildungsform ist das zweite Zahnrad in der zweiten Kammer an einer Getriebewelle befestigt und erstreckt sich von der zweiten Kammer in die erste Kammer. Die erste Kammer, in der die Verzahnungen des ersten und zweiten Zahnrads ineinander greifen und in der der Schmierstoff gehalten wird, wird durch die Bauteile des Trenneinsatzes und des zweiten Zahnrads von der zweiten Kammer separiert.

Der Trenneinsatz weist in einer ebenfalls vorteilhaften Ausführungsform einen Wellendurchgang auf, durch den sich die Getriebewelle hindurch erstreckt. Der Wellendurchgang des Trenneinsatzes ist dabei innerhalb der zweiten Kammer angeordnet, sodass die zweite Kammer durch den Wellendurchgang zu einem verbleibenden Innenraum des Getriebegehäuses bzw. einer dritten Kammer in dem Getriebegehäuse geöffnet ist. Alternativ ist auch umfasst, dass in der zweiten Kammer ein sich von dem Schmierstoff in der ersten Kammer unterscheidender zweiter Schmierstoff verwendet wird, wobei die Schmierstellen bzw. Schmierbereiche durch den Trenneinsatz abgetrennt werden. Dadurch können auch unterschiedliche "Schmierstoffkreisläufe" in dem Getriebegehäuse realisiert werden.

Vorteilhaft ist bei einer weiteren Ausführungsvariante ferner, dass sich die Getriebewelle in ihrer Axialrichtung durch die zweite Kammer vollständig hindurch erstreckt und in einer Ausführungsform sowohl auf einer ersten Seite der zweiten Kammer als auch an einer gegenüberliegenden zweiten Seite der zweiten Kammer an dem Getriebegehäuse durch Radial- und/oder Axiallager gelagert wird.

Das zweite Zahnrad und der Trenneinsatz weisen zumindest einen umlaufenden Vorsprung und eine zu dem Vorsprung korrespondierende umlaufende Nut auf. Der Vorsprung greift berührungslos in die Nut ein, wobei der Vorsprung und die Nut eine Labyrinthdichtung als Dichtmittel bilden. Die Labyrinthdichtung verläuft unmittelbar angrenzend an die Verzahnung des zweiten Zahnrads an deren radialer Innenseite. Der zumindest eine Vorsprung kann von dem zweiten Zahnrad, die jeweilige zu dem zumindest einen Vorsprung korrespondierende Nut von dem Trenneinsatz ausgebildet werden, oder umgekehrt. Dadurch, dass der zumindest eine Vorsprung in jeweils eine Nut berührungslos eingreift bzw. die Vorsprünge in den Nuten kämmen, ist zwischen dem Vorsprung / den Vorsprüngen und der Nut / den Nuten ein schmaler Spalt ausgebildet. Durch den Spalt wird der Strömungsweg für den Schmierstoff von der ersten in die zweite Kammer verlängert und mithin der Strömungswiderstand erhöht. Somit gelangt kein oder nur akzeptabel wenig Schmierstoff von der ersten in die zweite Kammer. Gleichzeit wird die Relativbewegung zwischen dem fest verbauten Trenneinsatz und dem rotierenden zweiten Zahnrad nicht gebremst oder eingeschränkt und ist stets gewährleistet.

Vorzugsweise umläuft die erste Kammer die zweite Kammer in Umfangsrichtung um die Rotationsachse des zweiten Zahnrades ringförmig, sodass die erste und zweite Kammer zumindest in Radialrichtung, d.h. senkrecht zur Rotationsachse, zueinander benachbart angeordnet sind und ein Abfließen des Schmierstoffs in Radialrichtung aus der ersten in die zweite Kammer von dem Trenneinsatz verhindert wird.

Um die erste Kammer durch den Trenneinsatz von der zweiten Kammer oder einem anderen Bereich des Getriebegehäuses zudem in Axialrichtung, d.h. entlang der Rotationsachse des zweiten Zahnrads, abzudichten, sieht eine vorteilhafte Ausführungsvariante vor, dass der Trenneinsatz an seinem radialen Außenumfangsrand eine umlaufende Dichtlippe aufweist, welche im Einbauzustand des Trenneinsatzes dichtend an dem Getriebegehäuse anliegt. Die Dichtlippe kann einstückig an dem Trenneinsatz angespritzt oder einteilig daran angeordnet sein.

In dem Getriebegehäuse ist eine vorgegebene Einbauposition des ersten und zweiten Zahnrades zueinander festgelegt. Damit der Trenneinsatz beim Einbau leicht gegenüber dem ersten und zweiten Zahnrad bzw. zu deren Einbauposition ausgerichtet werden kann, sieht eine vorteilhafte Weiterbildung zudem vor, dass der Trenneinsatz mindestens einen radialen und/oder axialen Vorsprung aufweist. Der zumindest eine Vorsprung ist zum einen zur Festlegung einer Position bzw. Lage des Trenneinsatzes gegenüber dem Getriebegehäuse ausgebildet, zum anderen, um in eine korrespondierende Ausnehmung des Getriebegehäuses einzugreifen.

Zudem kann der Trenneinsatz mit einem Befestigungsmittel, beispielsweise einer Schraube, Zylinderstiften oder einem Klebstoff in dem Getriebegehäuse fixiert werden.

In einer ebenfalls vorteilhaften Weiterbildung des Getriebes ist der Trenneinsatz ringförmig ausgebildet und in dem Getriebegehäuse konzentrisch zu dem zweiten Zahnrad angeordnet.

Der Trenneinsatz ist erfindungsgemäß in Axialrichtung unmittelbar angrenzend an dem ersten und zweiten Zahnrad angeordnet, wobei die Axialrichtung senkrecht zum Durchmesser des ersten und zweiten Zahnrads verläuft. Ferner weist der Trenneinsatz eine Zahnradaufnahme auf, welche die Verzahnung des ersten Zahnrades zumindest abschnittsweise umschließt.

Die Zahnradaufnahme ist in einer ersten Ausführung wannenförmig ausgebildet und umläuft das erste Zahnrad in seine Umfangsrichtung mit konstantem Abstand zu der ersten Verzahnung. Die wannenförmige Zahnradaufnahme umgibt das erste Zahnrad um vorzugsweise zwischen 160° bis 190°, sodass im Wesentlichen nur der Eingriffsabschnitt zur Verzahnung des zweiten Zahnrads unbedeckt bleibt.

Alternativ hierzu weist der Trenneinsatz in seiner Umfangsrichtung gesehen eine Aussparung mit zwei an die Aussparung angrenzenden Randabschnitten auf. Das erste Zahnrad ist in die Aussparung einsetzbar, wobei die Randabschnitte einander vorzugsweise diametral gegenüberliegen und zusammen mit dem Getriebegehäuse die Zahnradaufnahme bilden. Das Getriebegehäuse bildet dabei vorzugsweise einen Abschnitt der Zahnradaufnahme aus, der sich unmittelbar an die beiden Randabschnitte anschließt und diese verbindet. Im Gegensatz zur ersten Variante wird die Zahnradaufnahme somit durch das Getriebegehäuse im Zusammenspiel mit dem Trenneinsatz erzeugt.

Vorzugsweise ist der Trenneinsatz aus einem gleitfähigen Kunststoff gebildet, wodurch das zweite Zahnrad im Falle einer Berührung mit dem Trenneinsatz an diesem ohne bemerkenswerte Reibungsverluste entlang gleiten kann.

Das Getriebegehäuse umfasst bei einer weiteren Ausführungsvariante einen Gehäusetopf und einen Gehäusedeckel. In den Gehäusetopf wird vorzugsweise das zweite Zahnrad mit seiner Rotationsachse in Axialrichtung und mit seiner Rotationsachse orthogonal dazu das erste Zahnrad aufgenommen. Der Trenneinsatz ist an dem Gehäusedeckel oder einer Bodenfläche des Gehäusetopfes befestigt oder integral daran ausgebildet.

Die Innenwand des Getriebegehäuses bzw. eine Innenfläche des Gehäusetopfes umläuft das zweite Zahnrad vorzugsweise in einem geringen Abstand, sodass in Radialrichtung ein schmaler ringförmiger Spalt zwischen dem zweiten Zahnrad und dem Getriebegehäuse ausgebildet ist. Durch den schmalen Spalt zwischen dem zweiten Zahnrad und der Gehäuseinnenwand des Gehäusetopfes bzw. des Getriebegehäuses sowie den sich damit ergebenden hohen Strömungswiderstand wird der Schmierstoff auch in Axialrichtung in der ersten Kammer gehalten und nicht aus der ersten Kammer in Axialrichtung an dem zweiten Zahnrad vorbei gefördert.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Kronenradgetriebe im Schnitt;
- Fig. 2: ein Kronenrad mit Getriebewelle;
- Fig. 3: ein erstes Ausführungsbeispiel eines Trenneinsatzes;
- Fig. 4: ein zweites Ausführungsbeispiel eines Trenneinsatzes.

Die Figuren sind beispielhaft schematisch. Gleiche Bezugszeichen in den Figuren weisen auf gleiche funktionale und/oder strukturelle Merkmale hin.

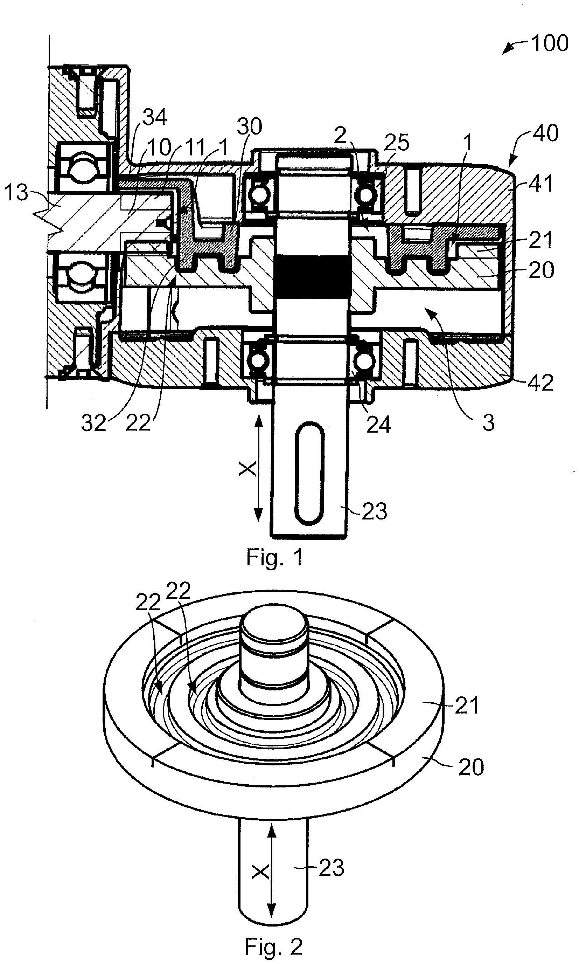

In Figur 1 ist ein Kronenradgetriebe 100 im Schnitt dargestellt. Das Kronenradgetriebe 100 weist ein Getriebegehäuse 40 auf, das durch den Gehäusetopf 41 und den Gehäusedeckel 42 gebildet ist. Innerhalb des Getriebegehäuses 40 sind das Stirnrad 10 (erstes Zahnrad) und das Kronenrad 20 (zweites Zahnrad) angeordnet. Das Stirnrad 10 und das Kronenrad 20 weisen ineinander greifende Verzahnungen 11, 21 auf und rotieren jeweils um ihre Rotationsachsen. Zwischen den Gehäusetopf 41 und dem Kronenrad 20 ist der Trenneinsatz 30 angeordnet und unterteilt den Innenraum des Getriebegehäuses zwischen dem Gehäusetopf 41 und dem Kronenrad 20 in die erste Kammer 1 und die radial weiter innen liegende zweite Kammer 2. Der Trenneinsatz 30 hält den Schmierstoff in der ersten Kammer 1 im Bereich der Verzahnungen 11, 21. Der Trenneinsatz 30 wirkt, wie nachfolgend näher beschrieben, mit dem Kronenrad 20 zusammen.

Bei dem in Figur 1 gezeigten Ausführungsbeispiel ist der Trenneinsatz 30 an einer Bodenfläche des Gehäusetopfes 41 befestigt, bildet einen zu der Getriebewelle 23 konzentrischen Wellendurchgang aus und erstreckt sich von dem Wellendurchgang aus in Radialrichtung, d.h. orthogonal zu der Axialrichtung X, nach außen, sodass der Trenneinsatz 30 im Wesentlichen ringförmig ist.

Der Trenneinsatz 30 weist zwei die Getriebewelle 23 bzw. die Rotationsachse des Kronenrads 20 konzentrisch umlaufende Vorsprünge 32 auf, welche sich in Richtung des Kronenrads 20 erstrecken und berührungslos in jeweils eine Nut 22 eingreifen. Die Nuten 22 werden von dem Kronenrad 20 ausgebildet und erstrecken sich ebenfalls konzentrisch um die Getriebewelle 23 bzw. um die Rotationsachse des Kronenrads 20.

Zwischen den Vorsprüngen 32 und den Nuten 22 sowie dem Abschnitt zwischen den Vorsprüngen 32 und dem Abschnitt zwischen den Nuten 22 verläuft ein schmaler Spalt, welcher den Strömungsweg und somit den Strömungswiderstand für den Schmierstoff von der ersten in die zweite Kammer 1, 2 deutlich erhöht. Die Vorsprünge 32 und die Nuten 22 erzeugen folglich eine Labyrinthdichtung, welche die erste und zweite Kammer 1, 2 zumindest in Radialrichtung voneinander abdichtet.

Das Stirnrad 10 und das Kronenrad 20 weisen jeweils eine Rotationsachse auf, um welche sie rotierbar gelagert sind, wobei die Rotationsachsen orthogonal zueinander angeordnet sind. Sowohl das Stirnrad 10 als auch das Kronenrad 20 sind jeweils mit einer Welle verbunden. Das Stirnrad 10 ist in der gezeigten Ausführungsform integral und einstückig mit seiner Stirnradwelle 13 ausgebildet. Das Kronenrad 20 weist als Welle eine Getriebewelle 23 auf, an welcher das Zahnrad 20 fixiert ist. Bei dem gezeigten Ausführungsbeispiel ist die Stirnradwelle 13 des Stirnrads 10 die Antriebswelle, welche von einem nicht dargestellten Elektromotor in Rotation versetzbar ist, sodass die Rotation über die Antriebs- bzw. Stirnradwelle 13 auf das Stirnrad 10, von dem Stirnrad 10 auf das Kronenrad 20 und von dem Kronenrad 20 auf die Getriebewelle 23 übertragbar ist. Folglich ist die Getriebewelle 23 bei der gezeigten Ausführungsform zugleich die Abtriebswelle des Getriebes.

Die Welle des Stirnrads 10 kann durch den Elektromotor bzw. in einem Elektromotorgehäuse gelagert sein. Alternativ ist das Stirnrad in einer vorgeschalteten Getriebestufe, beispielsweise einer vorgeschalteten Planetenstufe, gelagert. Die Getriebewelle 23 ist über zwei Lager 24, 25 beidseitig zu dem Kronenrad 20 gelagert.

Wie in Figur 1 dargestellt, ist der Trenneinsatz 30 in Axialrichtung X unmittelbar benachbart zu dem Kronenrad 20 und zu dem in das Kronenrad 20 eingreifenden Stirnrad 10 angeordnet, sodass auf der Seite des Kronenrades 20 die erste und zweite Kammer 1, 2 durch den Trenneinsatz 30 bestimmt bzw. begrenzt wird. Auf der in Axialrichtung gegenüberliegenden Seite des Kronenrades 20 befindet sich zudem eine dritte Kammer 3. Die dritte Kammer 3 kann beispielsweise durch nicht dargestellte, sich in Axialrichtung erstreckende Durchgänge in dem Kronenrad 20 mit der zweiten Kammer 2 verbunden sein.

Das Kronenrad 20 ist in Figur 2 zusammen mit der Getriebewelle 23 dargestellt. Die Verzahnung 21 ist lediglich schematisch angedeutet. Von einem axialen Zentrum des Kronenrads 20 erstreckt sich das Zahnrad 20 zunächst in Radialrichtung bzw. orthogonal zu der Axialrichtung X kreisförmig nach außen. Die Verzahnung 21 steht am Außenumfang des Zahnrades in Axialrichtung X hervor. In dem sich in Radialrichtung erstreckenden Abschnitt des Zahnrades 20 sind zwei Nuten 22 ausgebildet, in die im eingebauten Zustand die Vorsprünge 32 des Trenneinsatzes 30 dichtend eingreifen.

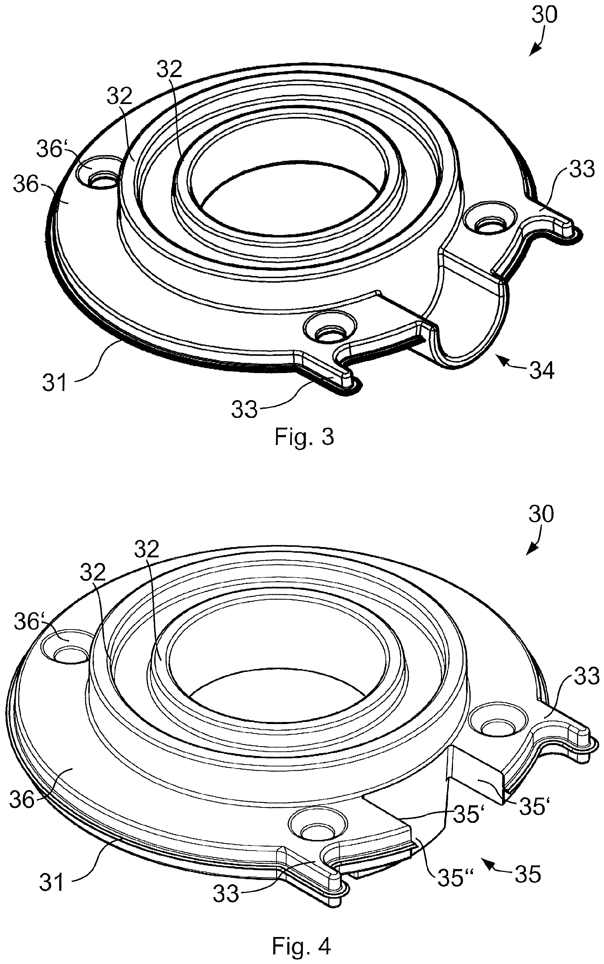

In den Figuren 3 und 4 ist jeweils eine Ausführungsvariante des Trenneinsatzes 30 dargestellt. In dem Getriebe 100, wie es in Figur 1 dargestellt ist, wird ein Trenneinsatz 30 entsprechend der Ausführungsform der Figur 3 verwendet. Die Trenneinsätze 30 weisen in beiden Varianten einen Wellendurchgang auf, von dem aus sie sich in Radialrichtung nach außen erstrecken und ringförmig sind. In einem in Radialrichtung ersten Abschnitt des Trenneinsatzes liegen die sich in Axialrichtung erstreckenden Vorsprünge 32 und bilden einen Radialdichtabschnitt des Trenneinsatzes 30. In einem sich an den ersten Abschnitt in Radialrichtung anschließenden zweiten Abschnitt ist eine der Verzahnung 21 des Kronenrads 20 gegenüberliegende und entlang dieser verlaufende Begrenzungsfläche 36 der ersten Kammer angeordnet. In diesem Abschnitt sind ferner drei asymmetrisch angeordnete und sich in Axialrichtung erstreckende Durchgangslöcher 36' ausgebildet. Über die Durchgangslöcher 36' wird der Trenneinsatz 30 mittels Schrauben an dem Getriebegehäuse 40 fixiert.

Ausgehend vom zweiten Abschnitt des Trenneinsatzes 30 erstrecken sich in der Ebene der Radialrichtung zudem zwei Vorsprünge 33, welche in einem in das Getriebegehäuse 40 eingebauten Zustand des Trenneinsatzes 30 in eine Ausnehmung des Getriebegehäuses 40 eingreifen. Durch die Vorsprünge 33 ist die Orientierung bzw. Lage des Trenneinsatzes 30 in Umfangsrichtung um die Rotationsachse der zweiten Welle bzw. um die Getriebewelle 23 in dem Getriebegehäuse 40 beim Einbau des Trenneinsatzes eindeutig vorbestimmt und festgelegt.

Hinzukommt, dass auch durch die Zahnradaufnahme 34 in Figur 3 bzw. durch die Ausnehmung 35 in Figur 4 für das Stirnrad 10 die Orientierung bzw. Lage des Trenneinsatzes 30 in dem Getriebegehäuse 40 vorbestimmt und festgelegt ist.

Umlaufend um den zweiten Abschnitt ist integral mit dem Trenneinsatz 30 zudem eine Dichtlippe 31 ausgebildet. Die Dichtlippe 31 liegt im in das Getriebegehäuse 40 eingebauten Zustand des Trenneinsatzes 30 dichtend an einer Innenfläche des Getriebegehäuses 40 an und bildet eine Axialdichtung, welche die erste Kammer 1 zusätzlich in Axialrichtung abdichtet.

Der wesentliche Unterschied zwischen den Ausführungsformen der Figuren 3 und 4 ist die Ausbildung der Zahnradaufnahme 34, die das Stirnrad 10 aufnimmt und die erste Kammer 1 um das Stirnrad 10 herum begrenzt.

In Figur 3 wird die Zahnradaufnahme 34 im zweiten Abschnitt des Trenneinsatzes 30 und durch den Trenneinsatz 30 ausgebildet. Die Zahnradaufnahme 34 ist im Wesentlichen wannen- bzw. im Querschnitt halbkreisförmig, sodass die zu dem Stirnrad 10 weisende Innenfläche der Zahnradaufnahme 34 das Stirnrad 10 in Umfangsrichtung des Zahnrades 10 um über 180° umschließt. Die Dichtlippe 31 umläuft den Trenneinsatz 30 und spart dabei die Zahnradaufnahme 34 aus. Davon abweichend wird die Zahnradaufnahme in Figur 4 gemeinsam von dem Trenneinsatz 30 und dem Getriebegehäuse 40 ausgebildet. Der Trenneinsatz 30 weist dazu in seinem zweiten Abschnitt eine Aussparung 35 auf, die durch zwei Randabschnitte 35' begrenzt wird. In der Aussparung 35 ist das Stirnrad 10 anordenbar. Um die Zahnradaufnahme in Radialrichtung zu begrenzen bildet der Trenneinsatz 30 in Radialrichtung angrenzend an die Aussparung 35 zudem ein sich in Axialrichtung ersteckenden Vorsprung 35" aus. Das Getriebegehäuse 40 umfasst einen Abschnitt, der an die Aussparung 35 angrenzt und einen zu der Aussparung 35 geöffneten Hohlraum bildet, der sich zwischen den Randabschnitten 35' erstreckt. Das Stirnrad 10 ist in der Aussparung 35 und in dem Hohlraum anordenbar. Die dadurch gebildete Zahnradaufnahme ist zu der zweiten Kammer 2 hin geschlossen und zu der ersten Kammer 1 hin offen. Die Dichtlippe 31 erstreckt sich umlaufend um den Trenneinsatz 30 und spart die Aussparung 35 aus.

## Patentansprüche

1. Getriebe mit einem Getriebegehäuse (40), in dessen Innenraum zumindest eine ineinander greifende Zahnradpaarung gebildet aus einem ersten Zahnrad (10) mit einer ersten Verzahnung (11) und einem zweiten Zahnrad (20) mit einer zweiten Verzahnung (21) angeordnet ist,
wobei in dem Getriebegehäuse (40) ein Trenneinsatz (30) angeordnet ist, der den Innenraum des Getriebegehäuses (40) in eine erste Kammer (1) und eine zweite Kammer (2) unterteilt, wobei die erste und die zweite Verzahnung (11, 21) der ersten und zweiten Zahnräder (10, 20) in der ersten Kammer (1) angeordnet sind,
die erste Kammer (1) die zweite Kammer (2) ringförmig umläuft,
der Trenneinsatz (30) mit dem zweiten Zahnrad (20) zusammenwirkt und dabei ein Dichtmittel bildet, das ausgebildet ist, einen Schmierstoff in der ersten Kammer (1) zu halten
wobei der Trenneinsatz (30) in Axialrichtung (X) unmittelbar angrenzend an dem ersten und zweiten Zahnrad (10, 20) angeordnet ist und eine Zahnradaufnahme (34) aufweist, welche die Verzahnung (11) des ersten Zahnrades (10) zumindest abschnittsweise umschließt
und wobei das zweite Zahnrad (20) und der Trenneinsatz (30) zumindest einen umlaufenden Vorsprung (32) und eine zu dem Vorsprung (32) korrespondierende umlaufende Nut (22) aufweisen, und **dadurch gekennzeichnet, dass** der Vorsprung (32) berührungslos in die Nut (22) eingreift, sodass der Vorsprung (32) und die Nut (22) eine Labyrinthdichtung als Dichtmittel bilden.

2. Getriebe nach Anspruch 1, wobei
das zweite Zahnrad (20) in der zweiten Kammer (2) an einer Getriebewelle (22) befestigt ist und sich von der zweiten Kammer (2) in die erste Kammer (1) erstreckt.

3. Getriebe nach Anspruch 1 oder 2, wobei
der Trenneinsatz (30) einen Wellendurchgang für eine/die Getriebewelle (23) aufweist.

4. Getriebe nach einem der vorhergehenden Ansprüche 2 oder 3, wobei
sich die Getriebewelle (23) in Axialrichtung (X) durch die zweite Kammer (2) vollständig hindurch erstreckt.

5. Getriebe nach einem der vorhergehenden Ansprüche, wobei
der Trenneinsatz (30) an seinem radialen Außenumfangsrand eine umlaufende Dichtlippe (31) aufweist.

6. Getriebe nach einem der vorhergehenden Ansprüche, wobei
der Trenneinsatz (30) mindestens einen radialen und/oder axialen Vorsprung (33) aufweist, der zur Festlegung einer Position des Trenneinsatzes (30) gegenüber dem Getriebegehäuse (40) ausgebildet ist, und, in eine korrespondierende Ausnehmung des Getriebegehäuses (40) einzugreifen.

7. Getriebe nach einem der vorhergehenden Ansprüche, wobei
der Trenneinsatz (30) ringförmig ausgebildet und in dem Getriebegehäuse (40) konzentrisch zu dem zweiten Zahnrad (20) angeordnet ist.

8. Getriebe nach dem vorhergehenden Anspruch 7, wobei
die Zahnradaufnahme (34) wannenförmig ausgebildet ist und das erste Zahnrad (10) in Umfangsrichtung mit konstantem Abstand abschnittsweise umschließt.

9. Getriebe nach dem vorhergehenden Anspruch 7, wobei
der Trenneinsatz (30) in Umfangsrichtung eine Aussparung (35) mit zwei Randabschnitten (35') aufweist, in die das erste Zahnrad einsetzbar ist, wobei die Randabschnitte (35') zusammen mit dem Getriebegehäuse (40) die Zahnradaufnahme bilden.

10. Getriebe nach einem der vorhergehenden Ansprüche, wobei
das Getriebegehäuse (40) einen Gehäusetopf (41) und einen Gehäusedeckel (42) umfasst und der Trenneinsatz (30) an dem Gehäusedeckel (42) oder einer Bodenfläche des Gehäusetopfes (41) befestigt oder integral daran ausgebildet ist.

11. Getriebe nach einem der vorhergehenden Ansprüche, wobei
das erste Zahnrad (10) ein Stirnrad und das zweite Zahnrad (20) ein Kronenrad ist oder das erste Zahnrad (10) ein Kegelrad und das zweite Zahnrad (20) ein Tellerrad ist

## Claims

1. A transmission with a transmission housing (40), in the interior of which at least one intermeshed gear pair is arranged, said gear pair being formed from a first gear wheel (10) with a first toothing (11) and a second gear wheel (20) with a second toothing (21),
wherein a separating insert (30) is arranged in the transmission housing (40), said separating insert dividing the interior of the transmission housing (40) into a first chamber (1) and a second chamber (2), wherein the first and the second toothing (11, 21) of the first and second gear wheels (10, 20) are arranged in the first chamber (1),
the first chamber (1) circularly surrounds the second chamber (2),
the separating insert (30) cooperates with the second gear wheel (20) and thereby forms a sealing means, which is designed to retain a lubricant in the first chamber (1), wherein the separating insert (30) is arranged directly adjacent the first and second gear wheel (10, 20) in the axial direction (X) and has a gear wheel mount (34), which encloses the toothing (11) of the first gear wheel (10), at least in sections,
and wherein the second gear wheel (20) and the separating insert (30) have at least one peripheral protrusion (32) and one peripheral groove (22) corresponding to the protrusion (32), and are **characterized in that** the protrusion (32) engages the groove (22) without contact such that the protrusion (32) and the groove (22) form a labyrinth seal as the sealing means.

2. The transmission according to claim 1, wherein
the second gear wheel (20) in the second chamber (2) is attached to a transmission shaft (22) and extends from the second chamber (2) into the first chamber (1).

3. The transmission according to claim 1 or 2, wherein
the separating insert (30) has a shaft passage for a/the transmission shaft (23).

4. The transmission according to either of preceding claims 2 or 3, wherein
the transmission shaft (23) extends completely through the second chamber (2) in the axial direction (X).

5. The transmission according to any of the preceding claims, wherein
the separating insert (30) has a peripheral sealing lip (31) on its radial outer peripheral edge.

6. The transmission according to any of the preceding claims, wherein
the separating insert (30) has at least one radial and/or axial protrusion (33), which is formed in order to establish a position of the separating insert (30) opposite the transmission housing (40), and to engage a corresponding recess of the transmission housing (40).

7. The transmission according to any of the preceding claims, wherein
the separating insert (30) is formed circularly and is arranged in the transmission housing (40) concentrically as relates to the second gear wheel (20).

8. The transmission according to preceding claim 7, wherein
the gear wheel mount (34) is formed trough-shaped, and surrounds the first gear wheel (10), in sections, in the circumferential direction at a constant distance.

9. The transmission according to preceding claim 7, wherein
the separating insert (30) has a recess (35) in the circumferential direction with two edge sections (35'), into which the first gear wheel can be inserted, wherein the edge sections (35') together with the transmission housing (40) form the gear wheel mount.

10. The transmission according to any of the preceding claims, wherein
the transmission housing (40) comprises a housing pot (41) and a housing cover (42), and the separating insert (30) is attached to the housing cover (42) or a base surface of the housing pot (41) or is integrally formed thereon.

11. The transmission according to any of the preceding claims, wherein
the first gear wheel (10) is a spur gear, and the second gear wheel (20) is a crown gear, or the first gear wheel (10) is a bevel gear, and the second gear wheel (20) is a ring gear.

## Revendications

1. Engrenage avec un boîtier d'engrenage (40), à l'intérieur duquel est agencée au moins une paire de roues dentées imbriquées formée d'une première roue dentée (10) avec une première denture (11) et d'une deuxième roue dentée (20) avec une deuxième denture (21),
dans lequel un insert de séparation (30), qui divise l'intérieur du boîtier d'engrenage (40) en une première chambre (1) et une deuxième chambre (2), est agencé dans le boîtier d'engrenage (40), dans lequel la première et la deuxième denture (11, 21) des première et deuxième roues dentées (10, 20) sont agencées dans la première chambre (1),
la première chambre (1) entoure la deuxième chambre (2) de manière annulaire,
l'insert de séparation (30) coopère avec la deuxième roue dentée (20) et forme ce faisant un moyen d'étanchéité, qui est réalisé pour retenir un lubrifiant dans la première chambre (1)
dans lequel l'insert de séparation (30) est agencé dans la direction axiale (X) de manière directement adjacente à la première et deuxième roue dentée (10, 20) et présente un logement de roue dentée (34), lequel entoure au moins par section la denture (11) de la première roue dentée (10)
et dans lequel la deuxième roue dentée (20) et l'insert de séparation (30) présentent au moins une saillie (32) périphérique et une rainure (22) périphérique correspondant à la saillie (32), et **caractérisé en ce que** la saillie (32) entre en prise sans contact dans la rainure (22), si bien que la saillie (32) et la rainure (22) forment un joint labyrinthe en tant que moyen d'étanchéité.

2. Engrenage selon la revendication 1, dans lequel
la deuxième roue dentée (20) dans la deuxième chambre (2) est fixée au niveau d'un arbre d'engrenage (22) et s'étend de la deuxième chambre (2) à la première chambre (1).

3. Engrenage selon la revendication 1 ou 2, dans lequel
l'insert de séparation (30) présente un passage d'arbre pour un/l'arbre d'engrenage (23).

4. Engrenage selon l'une quelconque des revendications précédentes 2 ou 3, dans lequel
l'arbre d'engrenage (23) s'étend dans la direction axiale (X) entièrement à travers la deuxième chambre (2).

5. Engrenage selon l'une quelconque des revendications précédentes, dans lequel
l'insert de séparation (30) présente au niveau de son bord périphérique extérieur radial une lèvre d'étanchéité circulaire (31).

6. Engrenage selon l'une quelconque des revendications précédentes, dans lequel
l'insert de séparation (30) présente au moins une saillie radiale et/ou axiale (33), qui est réalisée pour la définition d'une position de l'insert de séparation (30) par rapport au boîtier d'engrenage (40), et, pour entrer en prise dans un évidement correspond du boîtier d'engrenage (40).

7. Engrenage selon l'une quelconque des revendications précédentes, dans lequel
l'insert de séparation (30) est réalisé de manière annulaire et est agencé de manière concentrique à la deuxième roue dentée (20) dans le boîtier d'engrenage (40).

8. Engrenage selon la revendication précédente 7, dans lequel
le logement de roue dentée (34) est réalisé en forme de cuve et entoure dans la direction périphérique à distance constante par section la première roue dentée (10).

9. Engrenage selon la revendication précédente 7, dans lequel
l'insert de séparation (30) présente dans la direction périphérique un évidement (35) avec deux sections de bord (35'), dans lesquelles la première roue dentée peut être insérée, dans lequel les sections de bord (35') forment conjointement avec le boîtier d'engrenage (40) le logement de roue dentée.

10. Engrenage selon l'une quelconque des revendications précédentes, dans lequel
le boîtier d'engrenage (40) comprend un pot de boîtier (41) et un couvercle de boîtier (42) et l'insert de séparation (30) est fixé au niveau du couvercle de boîtier (42) ou d'une surface de fond du pot de boîtier (41) et y est réalisé de manière intégrale.

11. Engrenage selon l'une quelconque des revendications précédentes, dans lequel
la première roue dentée (10) est un pignon droit et la deuxième roue dentée (20) est une couronne dentée ou la première roue dentée (10) est une roue conique et la deuxième roue dentée (20) est une couronne.
